# EUROPÄISCHE PATENTSCHRIFT

(11) **EP 1 854 801 B1**
(45) Veröffentlichungstag und Bekanntmachung des Hinweises auf die Patenterteilung: **29.07.2009**
(21) Anmeldenummer: 07106958.7
(22) Anmeldetag: 25.04.2007
(51) Int. Cl.: C07F 7/00, B01J 19/00

(54) **Verfahren zur Trennung von Zirkonium und Hafnium**
Method for separating zirconium and hafnium
Procédé de séparation du zirconium et du hafnium

(30) Priorität: 03.05.2006 DE 102006020440
(43) Veröffentlichungstag der Anmeldung: 14.11.2007
(73) Patentinhaber: H.C. Starck GmbH, 38642 Goslar (DE)
(72) Erfinder: Reuter, Knud, 47800, Krefeld (DE); Passing, Gerd, 50354, Hürth (DE); Kirchmeyer, Stephan, 51375, Leverkusen (DE)
(74) Vertreter: Clauswitz, Kai-Uwe Wolfram

(56) Entgegenhaltungen:
- AT-B- 108 778
- CH-A5- 639 127
- US-A- 5 188 916
- US-A1- 2006 062 910

## Beschreibung

Die vorliegende Erfindung betrifft ein neues Verfahren zur Trennung von Zirkonium- und Hafniumverbindungen, insbesondere zur Abtrennung von Spuren an Zirkoniumverbindungen aus Hafniumverbindungen, mittels fraktionierender Kristallisation.

Hafnium kommt natürlich, z. B. in den Mineralien Zirkon und Baddeleyit, stets als Begleiter des Zirkoniums in minderen Anteilen von ca. 2 bis 7 Gew.-% vor. Zirkonium und Hafnium gehören wegen ihrer extremen chemischen Ähnlichkeit, unter anderem auf Grund der sogenannten Lanthanidenkontraktion, zu den am schwierigsten zu trennenden Elementen im Periodensystem.

Technisch besitzt die Trennung von Zirkonium und Hafnium Bedeutung wegen der sehr unterschiedlichen Neutronen-Einfangquerschnitte ihrer Atomkerne, die für die Nutzung der Metalle in Kernkraftwerken wichtig ist. Wegen der Hauptverwendung des Zirkoniums mit seiner sehr geringen Neutronenabsorption als Auskleidungsmaterial in der Reaktortechnik ist es dabei besonders wichtig, möglichst hafniumarmes Zirkonium herzustellen. Daneben wird in den industriellen Prozessen zur Zirkoniumherstellung das Hafnium letztlich als Zwangsanfallprodukt produziert, wobei dessen Reinheit, d. h. Zirkoniumfreiheit, von geringerer Relevanz ist. Technisches Hafnium und seine Verbindungen, z. B. Hafniumoxid oder Hafniumchlorid, werden daher im Zirkoniumgehalt oft nur bis zu Gehalten von ca. 2 Gew.-% Zirkonium abgereichert. Typische handelsübliche Hafniumverbindungen enthalten deshalb 1000 - 2000 Gew.-ppm oder mehr Zirkonium in Form der analogen Zirkoniumverbindungen, siehe z. B. auch Chem. & Eng. News 83(26), 2005, S. 26 - 29. Für die Nutzung von Hafnium als Moderator in der Kerntechnik, die auf seinem hohen Einfangquerschnitt für Neutronen beruhen, spielen Zirkonium-Verunreinigungen in dieser Größenordnung eine untergeordnete Rolle.

Für die Mikroelektronik spielen Hafniumverbindungen eine zunehmende Rolle als Vorläuferverbindungen (sog. Prekursoren, engl.: precursor) in der Chemical Vapour Deposition (CVD bzw. MOCVD = Metal Organic CVD) bzw. deren spezieller Ausführungsform, der ALD (Atomic Layer Deposition). Aus solchen flüchtigen, leicht verdampfbaren Prekursoren werden mit Hilfe der CVD-Technik funktionelle Schichten von Nitriden, wie HfN als Barriereschicht oder Kontaktschicht, oder Oxiden (HfO₂), gegebenenfalls auch gemischte Oxide oder Oxynitride mit anderen Elementen, wie Al, Si etc. als Dielektrika mit besonders hoher Dielektrizitätskonstante (DK), auf einem Substrat, wie z. B. einem Silizium-Wafer, abgeschieden. Um die vorteilhaften Eigenschaften der funktionellen Schichten anorganischer Hafniumverbindungen vollständig auszunutzen, ist es dabei wünschenswert, den Zirkoniumanteil möglichst niedrig einzustellen, siehe auch Chem. & Eng. News 83(26), 2005, S. 26 - 29.

Die bisherigen Techniken zur Trennung von Hafnium und Zirkonium sind mit unterschiedlichen Nachteilen behaftet, wobei insbesondere die Abreicherung des Zirkoniums auf Werte unter 500 Gew.-ppm und weiter bis unter 100 Gew.-ppm ein schwieriges Problem darstellt.

Zirkoniumarmes Hafniumchlorid kann beipielsweise durch Destillation aus Salzschmelzen hergestellt werden, doch ist die Reinigung bis zu sehr niedrigen Zirkoniumgehalten außerordentlich aufwändig. Andere Wege zur Abreicherung des Zirkoniums führen über Hafniumoxid, das aufwändig erneut chloriert (durch Carbochlorierung) werden muss. Andere Verfahren, wie zum Beispiel die Lösungsmittelextraktion von HCl-Lösungen der Thiocyanat-Komplexe mit Methyl-isobutylketon oder speziellen Trialkylphosphanoxiden sind u. a. mit Abwasserproblemen (Cyanid!) behaftet oder durch die schwierige, u. U. nicht gegebene industrielle Zugänglichkeit der Phosphorverbindungen (Trialkylphosphanoxide) nicht vorteilhaft. Siehe z. B. C. A. Pickles und S. N. Flengas, Canadian Metallurgical Quarterly 36(2), 1997, S. 131- 136; W. F. Fischer, B. Deierling, H. Heitsch, G. Otto, H.-P. Pohlmann und K. Reinhardt, Angew. Chem. 78(1), 1966, S. 19 - 27; A. B. V. da Silva und P. A. Distin, CIM Bulletin 91(1018), 1998, S. 221 - 224; A. da Silva, E. El-Ammouri und P. A. Distin, Canadian Metallurgical Quarterly 39(1), 2000, S. 37 - 42; X. J. Xang, C. Pin und A. G. Fane, J. Chromatographie Sci. 37(5), 1999, S. 171 - 179; X. J. Xang, A. G. Fane und C. Pin, Chem. Eng. J. 88, 2002, S. 37 - 44; X. J. Xang, A. G. Fane und C. Pin, Chem. Eng. J. 88, 2002, S. 45 - 51.

In der AT 108778 B wird ein Trennungsverfahren von Hafnium- und Zirkoniumverbindungen beschrieben, bei welchem zu einem hafniumhaltigen Zirkoniumsalz Oxalsäure im Überschuss dazugegeben wird, bevor eine fraktionierte Kristallisation durchgeführt wird. Zirkonium- oder Hafniumverbindungen enthaltend organische Reste werden nicht offenbart.

Es bestand somit weiterhin Bedarf an einem einfachen und effektiven Verfahren zur Trennung von Zirkonium- und Hafniumverbindungen, insbesondere zur Herstellung zirkoniumarmer HafniumVerbindungen, welches die vorangehend beschriebenen Nachteile nicht aufweist.

Somit bestand die Aufgabe der vorliegenden Erfindung darin, ein solches Verfahren aufzufinden. Eine weitere Aufgabe bestand darin, Hafniumverbindungen mit weniger als 500 Gew.-ppm, bevorzugt weniger als 100 Gew.-ppm Zirkoniumgehalt herzustellen.

Überraschend wurde gefunden, dass spezielle, in ihren sonstigen Eigenschaften sehr ähnliche zirkonium- und hafniumorganische Verbindungen - im Folgenden vereinfacht als Zirkonium- und Hafniumverbindung bezeichnet - durch einfache fraktionierende Kristallisation voneinander getrennt werden können.

Gegenstand der vorliegenden Erfindung ist somit ein Verfahren zur Trennung von Zirkonium- und Hafniumverbindungen, **dadurch gekennzeichnet, dass**
eine Mischung aus HfR₄ und ZrR₄,
worin
- R: für einen gegebenenfalls ein oder mehrere Heteroatome enthaltenden organischen Rest steht, der wenigstens ein Kohlenstoffatom enthält,
einer fraktionierenden Kristallisation unterzogen wird.

Das erfindungsgemäße Verfahren kann gleichermaßen zur Herstellung gereinigter Hafniumverbindungen mittels Abtrennung von Verunreinigungen in Form von Zirkoniumverbindungen oder zur Herstellung gereinigter Zirkoniumverbindungen mittels Abtrennung von Verunreinigungen in Form von Hafniumverbindungen dienen. Bevorzugt ist aber die Herstellung gereinigter Hafniumverbindungen mittels Abtrennung von Verunreinigungen in Form von Zirkoniumverbindungen. Das erfindungsgemäße Verfahren ist insbesondere geeignet zur Auftrennung solcher Mischungen enthaltend maximal 3 Gew.%, bevorzugt maximal 0,3 Gew.-% Zirkonium, bezogen auf das Gesamtgewicht der Mischung. Solche Mischungen werden beispielsweise bei der einleitend bereits beschriebenen Abreicherung von Hafnium in Zirkonium erhalten und liegen daher in den meisten technischen Hafniumverbindungen vor.

Im Rahmen der vorliegenden Erfindung ist unter einer Mischung sowohl eine homogene als auch eine heterogene Mischung zu verstehen. Makroskopische wie mikroskopische Mischungen sind davon umfasst.

Die fraktionierende Kristallisation wird bevorzugt bei Temperaturen zwischen -70°C und +100°C, bevorzugt zwischen -20°C und +70°C durchgeführt.

Bevorzugt handelt es sich bei der fraktionierenden Kristallisation gemäß erfindungsgemäßem Verfahren um eine Schmelzkristallisation. Diese kann jedoch in Gegenwart geringer Mengen inerter organischer Lösungsmittel oder bevorzugt in Abwesenheit jeglicher Lösungsmittel durchgeführt werden. Gegebenenfalls können in den Schmelzen zur Einstellung optimaler Kristallisationsbedingen Anteile bis zu 10 Gew. % eines inerten, das heißt nicht mit den hochreaktiven Zr- bzw. Hf-Verbindungen reagierenden organischen Lösungsmittels vorteilhaft sein. Solche Lösungsmittel sind beispielsweise aliphatische, cycloaliphatische oder aromatische Kohlenwasserstoffe, wie Pentan, Hexan, Heptan, Cyclohexan, Toluol oder Xylol, oder aliphatische offenkettige oder cyclische Ether, wie Diethylether, Di-n-propylether, Di-*iso*-propylether, Di-*n*-butylether, *tert*.-Butylmethylether, Tetrahydrofuran oder Dioxan. Bevorzugt sind jedoch Lösungsmittelanteile bis 3 Gew.-%; besonders bevorzugt ist kein Lösungsmittel in der Schmelze enthalten.

Bevorzugte Zirkonium- und Hafniumverbindungen ZrR₄ und HfR₄ sind dabei solche, worin R für gleiche oder verschiedene Reste YR¹ oder NR²R³ steht, worin
- Y: für O oder S und
- R¹, R², R³: jeweils unabhängig voneinander für einen linearen oder verzweigten gegebenenfalls substituierten C₁-C₁₈-Alkyl-, einen gegebenenenfalls substituierten C₃-C₆-Cycloalkyl- oder einen gegebenenfalls substituierten C₅-C₂₄-Arylrest stehen.

Besonders bevorzugte Zirkonium- und Hafniumverbindungen ZrR₄ und HfR₄ sind solche, worin R für gleiche C₁-C₆-Oxyalkyl- oder Di(C₁-C₆-alkyl)aminoreste steht. Di(C₁-C₆-alkyl)aminoreste sind ganz besonders bevorzugt.

Es ist bei der Verknüpfung bzw. Koordinierung des Restes R an das Hf- oder Zr-Zentrum nicht wesentlich, ob der Rest R direkt über ein oder mehrere C-Atom(e) oder über ein oder mehrere Heteroatom(e) wie O, S, N, P, Si etc. an das zentrale Zirkonium- bzw. Hafniumatom gebunden sind.

**C₁-C₆-Alkyl** steht beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, 1,1-Dimethylpropyl, 1,2-Dimethylpropyl, , n-Hexyl, 1-Methylpentyl, 2-Methylpentyl, 3-Methylpentyl, 4-Methylpeiityl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-3-methylpropyl, **C₁-C₁₈-Alkyl** darüber hinaus beispielsweise für n-Heptyl und n-Octyl, Pinyl, Adamantyl, die isomeren Menthyle, n-Nonyl, n-Decyl, n-Dodecyl, n-Tridecyl, n-Tetradecyl, n-Hexadecyl, n-Octadecyl oder Stearyl. Vorangehende beispielhafte Bedeutungen für Alkyl gelten ebenfalls für solche Reste, die einen solchen Alkylrest enthalten, wie z.B. Oxyalkylreste.

**C₃-C₆-Cycloalkyl** steht beispielsweise für Cyclopropyl, Cyclobutyl, Cylopentyl oder Cyclohexyl. **Aryl** steht jeweils unabhängig für einen aromatischen Rest mit 5 bis 24 Gerüstkohlenstoffatomen, in denen keines, ein, zwei oder drei Gerüstkohlenstoffatome pro Cyclus, im gesamten Molekül mindestens jedoch ein Gerüstkohlenstoffatom, gegen Heteroatome, ausgewählt aus der Gruppe Stickstoff, Schwefel oder Sauerstoff, ausgetauscht sein können, vorzugsweise jedoch für einen carbocyclischen aromatischen Rest mit 6 bis 24 Gerüstkohlenstoffatomen.

Beispiele für **C₆-C₂₄-Aryl** sind Phenyl, o-, p-, m-Tolyl, Naphthyl, Phenanthrenyl, Anthracenyl oder Fluorenyl, Beispiele für heteroaromatisches **C₅-C₂₄-Aryl** in denen keines, ein, zwei oder drei Gerüstkohlenstoffatome pro Cyclus, im gesamten Molekül mindestens jedoch ein Gerüstkohlenstoffatom, durch Heteroatome, ausgewählt aus der Gruppe Stickstoff, Schwefel oder Sauerstoff, substituiert sein können, sind beispielsweise Pyridyl, Pyridyl-N-Oxid, Pyrimidyl, Pyridazinyl, Pyrazinyl, Thienyl, Furyl, Pyrrolyl, Pyrazolyl, Imidazolyl, Thiazolyl, Oxazolyl oder Isoxazolyl, Indolizinyl, Indolyl, Benzo[b]thienyl, Benzo[b]furyl, Indazolyl, Chinolyl, Isochinolyl, Naphthyridinyl, Chinazolinyl, Benzofuranyl oder Dibenzofuranyl.

Ein gut geeignetes Beispiel für zu trennende Hafnium- und Zirkoniumverbindungen ist insbesondere das entsprechende Dimethylamid von Hf und Zr. Hafnium-tetrakis(dimethylamid) und Zirkonium-tetrakis(dimethylamid) unterscheiden sich in ihrem Schmelzpunkt um ca. 35 °C, wobei die Zirkoniumverbindung die höherschmelzende ist und daher aus einer Schmelze eines Gemisches beider Verbindungen bevorzugt ausgefroren wird. Somit wird unter den Kristallisationsbedingungen in der flüssigen Phase der Anteil der Zirkoniumverbindung gesenkt und ein gereinigtes Hafnium-tetrakis(dimethylamid) erhalten.

Die Verwendung der Dialkylamide, insbesondere der Dimethylamide zur Abtrennung von Zirkonium-Spuren aus den entsprechenden Hafniumverbindungen stellt aus verschiedenen Gründen eine besonders bevorzugte Ausführungsform der Erfindung dar. Zum einen sind die Hafniumamide sehr gut als CVD-Prekursoren geeignete Verbindungen, die z. B. zur Abscheidung von Hafniumnitrid (HfN) oder Hafniumoxid (HfO₂) verwendet werden können, so dass die gereinigten Hafniumverbindungen direkt in den CVD-Prozess eingesetzt werden können. Weiterhin eignen sich diese Amide wegen ihrer hohen Reaktivität gegenüber allen Verbindungen mit beweglichen Wasserstoffatomen zur Herstellung weiterer, reaktiver CVD-Prekusoren. Z. B. können mit Alkoholen Alkoxide, z. B. Hafniumethoxid bzw. das als leicht flüchtiger Prekursor beschriebene Hafnium-tert.butoxid, oder mit Cyclopentadien durch den Austausch eines Teils der Aminogruppen entsprechende Cyclopentadienyl-Komplexe erhalten werden. Aus dem Hafnium-tetrakis(dimethylamid) sind durch Umamidierung mit schwerer flüchtigen höheren Homologen, z. B. Methylethylamin oder Diethylamin, unter Abspaltung des bei Raumtemperatur gasförmig entweichenden Dimethylamins die entsprechenden Hafnium-tetrakis(dialkylamide) erhältlich.

Ein anderes Beispiel für den Einsatz des erfindungsgemäßen Verfahrens sind die tert.-Butoxide des Zr und Hf, bei denen Zr(O^{t}Bu)₄ mit 3 °C ebenfalls den höheren Schmelzpunkt aufweist, so dass es aus der knapp unter dieser Temperatur vorliegenden Hf(O^{t}Bu)₄-Schmelze bevorzugt ausfriert.

Wesentliches Merkmal für die Eignung von solchen Verbindungen für das erfindungsgemäße Verfahren ist die über einen hinreichend differierenden Schmelzpunkt herbeigeführte unterschiedliche Neigung zur Kristallisation aus der Schmelze, die zur Anreicherung einer Verbindung in der flüssigen und der entsprechenden Verarmung in der festen Phase führt. Bevorzugt für das erfindungsgemäße Verfahren ist, dass die Zirkoniumverbindung einen um wenigstens 3°C, bevorzugt einen um wenigstens 10°C, besonders bevorzugt einen um wenigstens 20°C höheren Schmelzpunkt aufweist als die Hafniumverbindung. Dabei reichert sich die Zirkoniumverbindung in der festen Phase an, wohingegen die aufgereinigte Hafniumverbindung in der flüssigen Phase verbleibt.

Das erfindungsgemäße Verfahren wird beispielsweise so durchgeführt, dass eine Mischung aus den Zirkonium- und Hafniumverbindungen zunächst vollständig geschmolzen wird, anschließend die Temperatur auf eine solche unterhalb des Schmelzpunktes der höher schmelzenden Verbindung, aber oberhalb der niedriger schmelzenden Verbindung abgesenkt und anschließend die Schmelze für einen Zeitraum von 1 bis 24 h bei dieser Temperatur gehalten wird. Dieser Vorgang kann mit den abgetrennten Phasen gegebenenfalls mehrfach wiederholt werden.

Das erfindungsgemäße Verfahren ist unter anderem geeignet, Hafniumverbindungen mit einem Gehalt an Zirkonium von weniger als 500 Gew.-ppm, bevorzugt weniger als 100 Gew.-ppm, bezogen auf das Gesamtgewicht, herzustellen. Solche Hafniumverbindung konnten bisher mit herkömmlichen Reinigungsverfahren nicht erhalten werden.

Der Gehalt an Zirkonium oder auch Hafnium kann mit unterschiedlichen Methoden bestimmt werden, wie beispielsweise AAS (Atomabsorptionsspektroskopie), ICP-OES (Inductively-Coupled Plasma Optical Emission Spectrometry) oder ICP-MS (Inductively-Coupled-Plasma Mass Spectrometry), siehe z. B. M. C. Wende, M. Luebke, A. Gross, K.-P. Jaeckel, Nachrichten aus der Chemie 52(11), 2004, S. 1152 - 1154. Diese Analysemethoden sind dem Fachmann bekannt und liefern Werte, die von der Meßmethode unabhängig sind.

Die folgenden Beispiele sollen die vorliegende Erfindung demonstrieren, sind aber nicht als Beschränkung aufzufassen.

### Beispiele

### Beispiel 1

37 g Hafnium-tetrakis(dimethylamid) mit einem Gehalt an 565 Gew.-ppm Zr wurden bei 45 °C komplett geschmolzen und anschließend 16 h bei einer Temperatur von 23 °C gehalten. Das Gemisch bestand danach aus 22 g kristalliner und 15 g flüssiger Phase. Die flüssige Phase enthielt nach ICP-OES-Analyse nur noch 415 Gew.-ppm Zr, die feste dagegen 660 Gew.-ppm Zr.

Die ICP-OES-Analyse (Inductively-Coupled Plasma Optical Emission Spectrometry) und deren Durchführung ist dem Fachmann bekannt und beispielsweise in M. C. Wende, M. Luebke, A. Gross, K.-P. Jaeckel, Nachrichten aus der Chemie 52(11), 2004, S. 1152 - 1154 oder J. Nolte, CLB Chemie in Labor und Biotechnik 51(8), 2000, S. 286 - 292 beschrieben.

### Beispiel 2

164,7 g Hafnium-tetrakis(dimethylamid) mit einem Gehalt an 0,81 Gew.-% Zr wurden analog Beispiel 1 behandelt und dieser Vorgang mit der abgetrennten flüssigen Phase (1) noch zwei weitere Male durchgeführt (2) und (3). Die jeweils erhaltenen flüssigen Phasen enthielten nach ICP-OES folgende Anteile an Zr:
0,77 Gew.-%
0,69 Gew.-%
0,59 Gew.-%,
womit der fortschreitende Reinigungseffekt entsprechend der Abreicherung an Zr dokumentiert wird. Die jeweiligen Ausbeuten an aufgereinigter Phase betrugen bei Schritt (1) 72 %, bei (2) 80 %, bei (3) 57 %.

### Beispiel 3

Dieses Beispiel zeigt den Anreicherungseffekt von Zr in den entnommenen kristallisierten Anteilen. Aus 95 g Hafnium-tetrakis(dimethylamid) mit 0,72 Gew.-% Zr wurden durch dreimaliges Teilaufschmelzen bei ca. 30 °C und wieder Kristallisieren im Kühlbad bei 0 °C nacheinander 26,9 g, 19,5 g und 26,0 g bei ca. 30 °C flüssiger Phase entnommen. Der zuletzt verbliebene kristalline Anteil (21,8 g) enthielt 1,3 Gew.-% Zr.

Die vereinigten flüssigen Phasen wurden noch zweimal in gleicher Weise wie in Beispiel 2 der Abtrennung von höherschmelzendem, stärker mit Zr verunreinigtem festem Anteil unterworfen. Der zum Schluss verbliebene, bei ca. 23 °C flüssige Anteil (19,4 g) enthielt noch 0,57 Gew.-% Zr.

## Patentansprüche

1. Verfahren zur Trennung von Zirkonium- und Hafniumverbindungen, **dadurch geknnzeichnet, dass**
eine Mischung aus HfR₄ und ZrR₄,
worin
R für einen gegebenenfalls ein oder mehrere Heteroatome enthaltenden organischen Rest steht, der wenigstens ein Kohlenstoffatom enthält,
einer fraktionierenden Kristallisation unterzogen wird.

2. Verfahren gemäß Anspruch 1, **dadurch gekennzeichnet, dass** die Zirkoniumverbindung einen um wenigstens 3°C, bevorzugt einen um wenigstens 10°C höheren Schmelzpunkt aufweist als die Hafniumverbindung.

3. Verfahren gemäß Anspruch 1 oder 2, **dadurch gekennzeichnet, dass** die Kristallisation zwisehnen -70°C und +100°C, bevorzugt zwischen -20°C und +70°C durchgefürt wird.

4. Verfahren gemäß wenigstens einem der Ansprüche 1 bis 3, **dadurch gekennzeichnet, dass** R für gleiche oder verschiedene Reste YR¹ oder NR²R³ steht, worin
Y für O oder S und
R¹, R², R³ jeweils unabhängig voneinander für einen linearen oder verzweigten gegebenenfalls substituierten C₁-C₁₈-Alkyl-, einen gegebenenenfalls substituierten C₃-C₆-Cycloalkyl- oder einen gegebenenfalls substituierten C₅-C₂₄-Arylrest stehen.

5. Verfahren gemäß wenigstens einem der Ansprüche 1 bis 4, **dadurch gekennzeichnet, dass** R für gleiche C₁-C₆-Oxyalkyl- oder Di(C₁-C₆-alkyl)aminoreste steht.

6. Verfahren gemäß wenigstens einem der Ansprüche 1 bis 5, **dadurch gekennzeichnet, dass** die zur Trennung eingesetzte Mischung maximal 10 Gew.-% eines gegenüber den Hafnium- und Zirkoniumverbindungen inerten organischen Lösungsmittels enthält, bezogen auf das Gesamtgewicht des Mischung.

7. Verfahren gemäß wenigstens einem der Ansprüche 1 bis 6, **dadurch gekennzeichnet, dass** es sich bei der fraktionierenden Kristallisation um eine Schinelzkristallisation handelt.

8. Verfahren gemäß wenigstens einem der Ansprüche 1 bis 7, **dadurch gekennzeichnet, dass** die zur Trennung eingesetzte Mischung maximal 3 Gew.-%, bevorzugt maximal 0,3 Gew.-% Zirkonium enthält, bezogen auf das Gesamtgewicht der Mischung.

## Claims

1. Process for separating zirconium compounds and hafnium compounds, **characterized in that**
a mixture of HfR₄ and ZrR₄
in which
R is an organic radical which contains at least one carbon atom and optionally one or more heteroatoms
is subjected to a fractional crystallization.

2. Process according to Claim 1, **characterized in that** the zirconium compound has a melting point higher by at least 3°C, preferably by at least 10°C, than the hafnium compound.

3. Process according to Claim 1 or 2, **characterized in that** the crystallization is performed between -70°C and +100°C, preferably between -20°C and +70°C.

4. Process according to at least one of Claims 1 to 3, **characterized in that** R represents identical or different YR¹ or NR²R³ radicals in which
Y is O or S and
R¹, R², R³ are each independently a linear or branched, optionally substituted C₁-C₁₈-alkyl radical, an optionally substituted C₃-C₆-cycloalkyl radical or an optionally substituted C₅-C₂₄-aryl radical.

5. Process according to at least one of Claims 1 to 4, **characterized in that** R represents identical C₁-C₆-oxyalkyl or di(C₁-C₆-alkyl)amino radicals.

6. Process according to at least one of Claims 1 to 5, **characterized in that** the mixture used for separation contains not more than 10% by weight of an organic solvent which is inert toward the hafnium and zirconium compounds, based on the total weight of the mixture.

7. Process according to at least one of Claims 1 Lo 6, **characterized in that** the fractional crystallization is a melt crystallization.

8. Process according to at least one of Claims 1 Lo 7, **characterized in that** the mixture used for separation contains not more than 3% by weight, preferably not more than 0.3% by weight, of zirconium, based on the total weight of the mixture.

## Revendications

1. Procédé pour la séparation de composés de zirconium et d'hafnium, **caractérisé en ce qu'**un mélange de HfR₄ et de ZrR₄, où
R représente un radical organique qui contient au moins un atome de carbone, contenant le cas échéant un ou plusieurs hétéroatomes,
est soumis à une cristallisation fractionnée.

2. Procédé selon la revendication 1, **caractérisé en ce que** le composé du zirconium présente un point de fusion supérieur d'au moins 3°C, de préférence d'au moins 10°C à celui du composé d'hafnium.

3. Procédé selon la revendication 1 ou 2, **caractérisé en ce que** la cristallisation est réalisée entre -70°C et +100°C, de préférence entre -20°C et +70°C.

4. Procédé selon au moins l'une quelconque des revendications 1 à 3, **caractérisé en ce que** R représente des radicaux YR¹ ou NR²R³ identiques ou différents, où
Y représente O ou S et
R¹, R² et R³ représentent, à chaque fois indépendamment l'un de l'autre, un radical C₁-C₁₈-alkyle linéaire ou ramifié, le cas échéant substitué, un radical C₃-C₆-cycloalkyle le cas échant substitué ou un radical C₅-C₂₄-aryle le cas échéant substitué.

5. Procédé selon au moins l'une quelconque des revendications 1 à 4, **caractérisé en ce que** R représente des radicaux C₁-C₆-oxyalkyle ou di(C₁-C₆-alkyl)amino identiques.

6. Procédé selon au moins l'une quelconque des revendications 1 à 5, **caractérisé en ce que** le mélange utilisé pour la séparation contient au maximum 10% en poids d'un solvant organique inerte par rapport aux composés d'hafnium et de zirconium, par rapport au poids total du mélange.

7. Procédé selon au moins l'une quelconque des revendications 1 à 6, **caractérisé en ce qu'**il s'agit, lors de la cristallisation fractionnée d'une cristallisation en masse fondue.

8. Procédé selon au moins l'une quelconque des revendications 1 à 7, **caractérisé en ce que** le mélange utilisé pour la séparation contient au maximum 3% en poids, de préférence au maximum 0,3% en poids de zirconium, par rapport au poids total du mélange.
